# EUROPEAN PATENT APPLICATION

(11) **EP 3 473 349 A1**
(43) Date of publication of application: **24.04.2019**
(21) Application number: 17196822.5
(22) Date of filing: 17.10.2017
(51) Int. Cl.: B21J 15/50, B23D 71/04, B24D 15/02

(54) **MANUAL RIVET REMOVING DEVICE AND METHOD**

(71) Applicant: Airbus Defence and Space GmbH, 82024 Taufkirchen (DE)
(72) Inventor: Detter, Tobias, 86564 Brunnen (DE)
(74) Representative: Schicker, Silvia

(57) **Abstract**

A manual rivet removing device (10) for loosening a rivet, in particular a blind rivet, secured to a component comprises an exposed cutting surface (22) for removing material from a rivet head (16) protruding from a component surface (14) and a spacer unit (24) for spacing the cutting surface (22) from the component surface (14). The spacer unit (24) is designed to, in a state in which the spacer unit (24) abuts on the component surface (14), space the cutting surface (22) from the component surface (12) at a predefined distance and to align the cutting surface (22) relative to the component surface (14).

## Description

The present invention refers to a manual rivet removing device and a method of removing a rivet using such a manual rivet removing device.

Rivets are permanent mechanical fasteners which create an interlocking connection between structures to be joined. They are made of a plastically deformable material and typically, before being installed, comprise a rivet head and a rivet shaft. For installing the rivet, the rivet shaft is passed into a through hole in the structures to be joined and is then driven, i.e. by means of a compressive force, so as to fill the through hole and to form a further rivet head on an opposed side of the rivet shaft, thereby creating an interlocking connection.

Where access to one side of the structures is difficult or impossible, so-called blind rivets are provided which are designed to be installed from one side of the structures. In this way, blind rivets can be easily and rapidly installed from one side of the structures to be joined by only one person using a rivet fastening tool. Typical examples of blind fasteners used in aerospace applications are locking spindle blind rivets, i.e. manufactured under the name CherryMAX®.

Generally, a locking spindle blind rivet comprises a hollow rivet sleeve having a rivet head and a rivet shaft made of a plastically formable material, a spindle moveably mounted therein, and a locking collar. The spindle has a stem for being gripped by a rivet fastening tool which is in frangible attachment to a shear pin with a mandrel portion. The locking collar is moveably mounted on the stem. The rivet is installed by placing the above-described assembly in a hole in the structures to be joined. The tool is used to hold the rivet sleeve in the hole and simultaneously pull the stem upward. This causes the shear pin to slide up through the sleeve. With the shear pin portion, also the mandrel portion slides up and deforms the end of the sleeve extending out the other side of the structure. This locks the sleeve in place. Simultaneously, a groove on the shear pin portion becomes aligned with a groove or slot in the head of the sleeve and the locking collar is wedged therein by the tool locking the shear pin portion in place. Thereafter, continued pulling on the stem causes it to separate from the shear pin portion.

For removing a rivet from a structure, it is known to remove the rivet head in order to loosen the interlocking connection provided by the rivet. Then, upon applying a pressing force onto the rivet shaft, e.g. by means of a pressing pin, the rivet is pressed out of the through hole of the structures. Typically, for removing the rivet head, a rivet-miller tool is used having a power-driven abrasive coated disc which is pressed against and run over the rivet head with high rotational speed, thereby cutting the rivet head.

The invention is directed at the object of providing a rivet removing device for loosening a rivet secured to a component which reliably avoids damaging the component, i.e. a surface thereof from which the rivet protrudes. Furthermore, the invention is directed at the object of providing a method of removing a rivet using a rivet removing device of such type.

These objects are addressed by a manual rivet removing device as defined in claim 1 and a method of removing a rivet secured to a component using a rivet removing device of such type as defined in claim 14.

A manual rivet removing device is provided for loosening a rivet secured to a component. In this context, the term "loosening" means weakening or releasing an interlock connection between the rivet and the component. The manual rivet removing device is preferably intended and designed to loosen a rivet secured to an aircraft component. For example, the aircraft component may be a skin layer of a composite sandwich panel, in particular of an aircraft honeycomb structure. A skin layer of such type may be made of a thin fibre composite material, e.g. having a thickness of substantially 3 mm, forming a fragile structure which is particularly sensitive to pressure.

The rivet to be removed is preferably a blind rivet, in particular a locking spindle blind rivet having a configuration as indicated in the introductory part. For example, the rivet may be a CherryMAX® rivet manufactured by SPS Technologies LLC, DBA Cherry Aerospace. Specifically, in a rivet of such type, the locking collar is configured to lock a relative movement between the shear pin and the rivet sleeve in a state where the rivet is secured to the component, thereby creating an interlocking connection between the rivet and the component. In case the locking collar is removed, a movement of the shear pin in direction of its mandrel portion is no longer locked by the locking collar. Thus, in case a pressure force is applied onto the shear pin in the direction of its mandrel portion after the locking collar has been removed and the pressure force exceeds a frictional force holding the shear pin within the rivet sleeve, the shear pin can be released from the rivet sleeve such that only the rivet sleeve remains in the through hole of the component. Then, once the shear pin is released, upon applying a further pressure force onto the rivet sleeve, it can be plastically deformed and pressed out from the through hole.

The manual rivet removing device comprises an exposed cutting surface. In this context the term "exposed" means that the cutting surface is provided at an accessible, outer surface of the manual rivet removing device. The cutting surface is designed and configured to remove material from a rivet head protruding from a component surface. Specifically, the cutting surface may be designed and configured to, upon being dragged over the surface of the rivet head, abrade material from the rivet head. Preferably, the cutting surface is made of a material capable of removing material from both the rivet head and the locking collar arranged in the rivet head of a locking spindle blind rivet. The cutting surface may be a surface coated with abrasives. For example, the cutting surface may be a filing surface having a pattern of spaced grooves configured to remove material from the rivet head by filing.

The manual rivet removing device further comprises a spacer unit for spacing the cutting surface from the component surface. Specifically, the spacer unit is designed to, in a state in which the spacer unit abuts on the component surface, space the cutting surface from the component surface at a predefined distance and to align the cutting surface relative to the component surface.

By being equipped with the spacer unit, the manual rivet removing device avoids that, upon processing the rivet head by means of the cutting surface, the cutting surface unintendedly contacts and thus damages the component surface. In this way, the spacer unit provides a damage protection function.

Furthermore, the present invention provides a manual rivet removing device. In this context, the term "manual" refers to a device, in which, for removing material from the rivet head, the cutting surface is not required to be power-driven. In other words, the rivet removing device is preferably intended to be moved manually by an operator so as to drag the cutting surface over the rivet head for removing material therefrom. Compared to known power-driven rivet removing devices, such as the rivet-miller tool having a drive unit for rotating an abrasive coated disc, the manual rivet removing device is provided with a light-weight design. In this way, the handling of the rivet removing device for an operator is improved and a pressure applied onto the component can be reduced. As a result, the rivet removing device can be operated in a highly controlled manner avoiding that the component is subjected to inadmissible loads. For that reason, the manual rivet removing device is particularly suitable to be applied on highly sensitive structures and components in the field of aerospace applications, e.g. for removing rivets from honeycomb or satellite structures.

The spacer unit may be designed such that the predefined distance between the cutting surface and the component surface is adapted to the rivet, in particular the rivet head to be removed. Specifically, the predefined distance may be set such that a sufficient material removal from the rivet head for loosening the rivet can be ensured. For removing a locking spindle blind rivet, this may be the case when, upon removing material from the rivet head, the locking provided by the locking collar is released. Accordingly, the predefined distance may be set such that, when processing the rivet head by means of the cutting surface, material from the locking collar within the rivet head can be successively removed so as to loosen the rivet. For example, the predefined distance may be substantially 0,4 mm.

Preferably, the cutting surface is planar. Alternatively, the cutting surface may be curved. In a further development, the shape of the cutting surface may be adapted to the shape of the component surface.

The cutting surface may have a rectangular shape or any other shape, such as a circular shape. For ensuring a compact design of the manual rivet removing device, the cutting surface preferably has an elongated rectangular shape. Accordingly, the cutting surface may have a length, i.e. an extension of the cutting surface along a longitudinal direction, that is greater, in particular considerably greater than a width thereof, i.e. an extension of the cutting surface along a transverse direction. The cutting surface may have an effective direction, along which the cutting surface is intended to be directed over the rivet head for removing material therefrom in an effective manner. The cutting surface preferably is dimensioned such that its longitudinal direction corresponds to the effective direction. Thus, the cutting surface may be dimensioned such that its extension along the effective direction, i.e. the longitudinal direction of the cutting surface, is greater than its extension along a direction transverse to the effective direction, i.e. the transverse direction of the cutting surface.

Preferably, the manual rivet removing device is designed such that, in the state in which the spacer unit abuts on the component surface, the cutting surface faces the component surface. The manual rivet removing device may be further designed such that, in the state in which the spacer unit abuts on the component surface, the spacer unit is designed to align or position the cutting surface in parallel to the component surface. In other words, the spacer unit is designed such that, in the state in which the spacer unit abuts on the component surface, a constant distance between the cutting surface and the component surface is provided.

For ensuring that the cutting surface is spaced from the component surface, the spacer unit, in the state in which the spacer unit abuts on the component surface, extends in a surface normal direction of the cutting surface from the cutting surface to the component surface. Further, the spacer unit may comprise at least one spacer element arranged around the cutting surface. The at least one spacer element may be designed to prevent the cutting surface from getting in contact with the component surface even if the cutting surface approaches the components surface inclined relative to a position in which the spacer units abuts on the components surface. For example, the spacer element may comprise at least one spacer element which, in the longitudinal and/or transverse direction of the cutting surface, is arranged next to the cutting surface, in particular on both sides. In this way, the cutting surface is at least partially enclosed by the spacer unit. For example, the spacer unit may comprise four spacer elements which, in the plane of the cutting surface may be arranged around the cutting surface. Preferably, in case the cutting surface has a rectangular shape, each of the four spacer elements is arranged in the area of a corner of the cutting surface, respectively. Further the at least one spacer element of the spacer element may be arranged so as to protrude beyond the cutting surface in the longitudinal and/or transversal direction thereof.

The spacer unit is at least partially made of Teflon. Specifically, a contact surface of the spacer elements, which is configured to contact the component surface, may be made of Teflon. By covering a contact surface of the spacer unit with Teflon, a damage of the component surface caused by the spacer element can be avoided.

In a further development, the spacer unit may comprise at least four spacer elements in form of spacer wheels rotationally supported in the manual rivet removing device. The spacer wheels may be arranged around the cutting surface. Further, the at least four spacer wheels are configured to roll over the component surface for moving the manual rivet removing device relative to the component surface. In this way, the manual rivet removing device arranged on the component surface can be moved relative thereto without dragging a contact surface of the spacer unit over the component surface. This has the effect that particles generated upon processing the rivet head with the cutting surface, which may be spread over the component surface, are prevented from being dragged over the component surface, thereby causing damage to the component. Specifically, even though particles generated upon processing the rivet head may be arranged between the contact surface of the spacer wheels and the component surface, these particles, by virtue of the roling movement of the spacer wheels, are not dragged over the component surface.

In a further development, the manual rivet removing tool may comprise a cutting plate having the cutting surface and a housing supporting the cutting plate. The cutting plate may be interchangeably connectable to the housing. In this way, the rivet removing device is provided with an improved configurability in order to easily adapt the device to differing applications, i.e. rivets to be removed. The cutting plate may be made of steel, such as high-tensile and/or high-alloyed steel, particularly tool steel. Specifically, the cutting surface may be formed by a surface of the cutting plate. Alternatively, the cutting surface may be formed by an abrasive paper detachably secured to the cutting plate.

The housing may be made of aluminium, in particular of high-tensile aluminium, or steel, in particular of high-tensile and/or high-alloyed steel.

In a further development, the manual rivet removing device may comprise a distance adjustment unit configured to variably adjust the predefined distance between the cutting surface and the component surface. In other words, the distance adjustment unit is configured to variably adjust a relative position between the cutting surface and the spacer unit in the surface normal direction of the cutting surface. Specifically, the distance adjustment unit may be provided in form of a mounting supporting the spacer unit and/or the cutting plate and may be configured to variably adjust a relative position between the cutting surface and the spacer unit in the surface normal direction of the cutting surface. By this configuration, the configurability of the manual rivet removing device can be improved.

A method is provided for removing a rivet, particularly a blind rivet, secured to a component using a manual rivet removing device having the above mentioned technical features. The method comprises a step of removing material from a rivet head protruding from a component surface by manually dragging the cutting surface of the manual rivet removing device over the rivet head. This step may be repeatedly performed until the spacer unit of the manual rivet removing device can be evenly positioned onto the component surface in a position where the cutting surface faces the rivet to be removed. In other words, this step may be repeatedly performed until the interlocking connection between the rivet and the component is released.

Further, the method may comprise the steps of covering the components surface with a packaging foil and cutting the packaging foil around a work area on the component surface comprising the rivet head so as to create a flap in the packaging foil. To minimize the risk of damage when cutting out the flap, the packaging foil may be lifted from the component surface. Further, the flap may be folded back or removed so as to lay open the work area around the rivet head which is delimited by the packaging foil. Next, the packaging foil around the work area and the flap may be fixed by attaching a fixing tape along an edge region of the working area and the folded flap.

In a further development, in order to avoid a contamination of the work area by particles generated upon removing material from the rivet head by means of the cutting surface, the generated particles may be drawn off by means of a vacuum cleaner, in particular during performing the step of removing material from the rivet head.

Further, after having loosened the rivet by removing material from the rivet head, a rivet shaft of the rivet may be released from a through-hole provided in the component. Still further, a cleaning of the work area and the created flap in the packaging foil may be performed. Then, a step of covering and closing the work area by folding back the created flap onto the work area and fixing the flap to the packaging foil by attaching a fixing tape along a cutting edge of the flap so as to seal the packaging foil may be performed.

By using the manual rivet removing device, an operator can perform the method of removing a rivet secured to a component in a highly controlled manner avoiding that the component is subjected to inadmissible loads. Further, the manual river removing device prevents the component from contacting the cutting surface, thereby providing further damage protection of the component. This qualifies the method for being performed on highly sensitive structures and components in the field of aerospace applications, e.g. for removing rivets from honeycomb or satellite structures.

Preferred embodiments of the invention are explained in greater detail below with reference to the accompanying schematic drawings, in which:
- Figure 1: shows a perspective view on a manual rivet removing device according to a first embodiment,
- Figure 2: shows a plan view on a cutting surface of the device shown in figure 1,
- Figure 3: shows an enlarged view on a rivet to be processed by means of the device shown in figures 1 and 2,
- Figure 4: shows an enlarged view on the rivet after being processed by means of the device shown in figures 1 and 2,
- Figure 5: shows a longitudinal sectional view of a manual rivet removing device according to a second embodiment, and
- Figures 6a-c: show a method of removing a rivet using the device shown in figures 1 to 3.

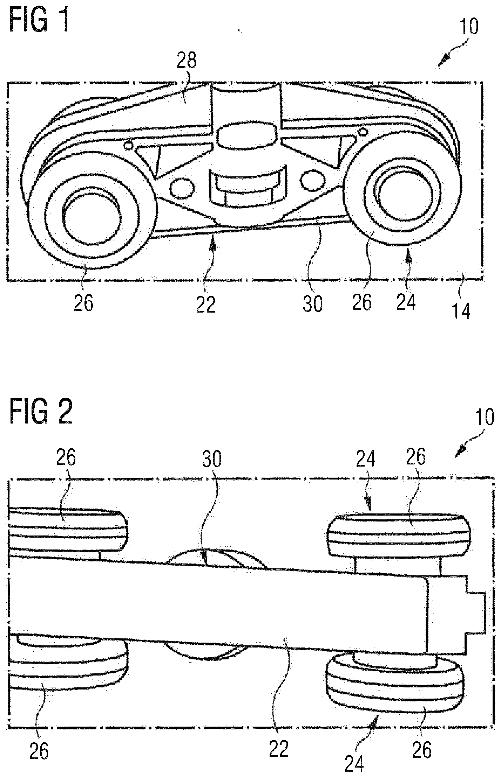

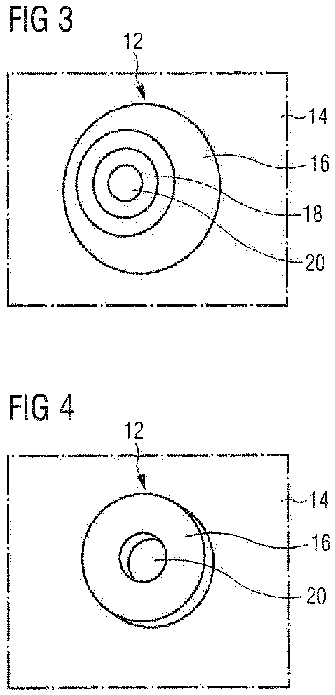

Figures 1 and 2 show a manual rivet removing device 10 according to a first embodiment for loosening a rivet 12 secured to an aircraft component as depicted in figures 3 and 4. Specifically, the aircraft component is a skin layer of a honeycomb structure. The skin layer is made of a thin fibre composite material having a thickness of substantially 3 mm.

The rivet 12 to be removed is a locking spindle blind rivet manufactured under the name CherryMAX®. Specifically, as depicted in figure 3, the rivet 12 comprises a rivet head 16 protruding from a component surface 14. Within the rivet head 16, a locking collar 18 is provided which locks a relative movement between a shear pin 20 and the rivet head 16 of the rivet 12, thereby generating an interlocking connection between the rivet 12 and the component.

The manual rivet removing device 10 comprises an exposed cutting surface 22. The cutting surface 22 is designed and configured to remove material from the rivet head 16 protruding from the component surface 14. Specifically, the cutting surface 22 is designed and configured to, upon being dragged over the rivet head 16, abrade material from the rivet head 16 as well as the locking collar 18 and the shear pin 20 arranged in the rivet head 16. The cutting surface 22 is a filing surface having a pattern of spaced grooves configured to remove material from the rivet head 16 by filing.

The manual rivet removing device 10 further comprises a spacer unit 24 for spacing the cutting surface 22 from the component surface 14. Specifically, the spacer unit 24 is designed to, in a state in which the spacer unit 24 abuts on the component surface 14 as depicted in figure 1, space the cutting surface 22 from the component surface 14 at a predefined distance and to align the cutting surface 22 relative to the component surface 14.

The predefined distance between the cutting surface 22 and the component surface 14 is adapted to the rivet head 16 to be removed. Specifically, the predefined distance is set such that a sufficient material removal from the rivet head 16 for loosening the rivet 12 can be ensured. This is achieved when, upon removing material from the rivet head 16, the locking collar 18 is completely degraded from the rivet head 16, as depicted in figure 4. In this way, the locking provided by the locking collar 18 is released and the rivet 12 is loosened. In the present embodiment, the predefined distance is 0,4 mm which corresponds to the height of the rivet head 16 protruding from the component surface 14 after being processed by the manual rivet removing device 10 as shown in figure 4.

The shape of the cutting surface 22 adapted to the shape of the component surface 14. Specifically, the cutting surface 22 is planar. As depicted in figure 2, the cutting surface 22 has an elongated rectangular shape with a length, i.e. an extension of the cutting surface 22 along a longitudinal direction, that is greater than a width thereof, i.e. an extension of the cutting surface 22 along a transverse direction. The cutting surface 22 has an effective direction, along which the cutting surface 22 is intended to be directed over the rivet head 16 for removing material therefrom in an effective manner. In the present embodiment, the longitudinal direction of the cutting surface 22 corresponds to its effective direction.

The manual rivet removing device 10 is designed such that, in the state in which the spacer unit 24 abuts on the component surface 14, the cutting surface 22 faces the component surface 14 and is aligned in parallel thereto.

The spacer unit 24 comprises four spacer wheels 26 rotationally supported in a housing 28 of the manual rivet removing device 10. Specifically, on opposed sides of the housing 28, two spacer wheels 26 are arranged, respectively. The four spacer wheels 26 are arranged around the cutting surface 22 and are configured to roll over the component surface 14 for moving the manual rivet removing device 10 relative to the component surface 14 along the longitudinal direction of the cutting surface 22. Each of the spacer wheels 26 is provided in the area of one corner of the rectangular cutting surface 22, respectively. For ensuring that the cutting surface 22 is spaced from the component surface 14 in an effective manner, the spacer wheels 26 are designed such that they protrude in a surface normal direction and the longitudinal direction of the cutting surface 22 beyond the cutting surface 22. In the state in which the spacer unit 24 abuts on the component surface 14, each of the four spacer wheels 26 extends in the surface normal direction of the cutting surface 22 from the cutting surface 22 to the component surface 14. By this configuration, the spacer unit 24 prevents the cutting surface 22 from contacting the component surface 14 even if the cutting surface 22 approaches the components surface 14 inclined relative to a position in which the spacer unit 24 abuts on the component surface 14. The spacer wheels 26 are made of Teflon.

Further, the manual rivet removing tool 10 comprises a cutting plate 30 forming the cutting surface 22. The housing 28 supports the cutting plate 30 which is interchangeably connected thereto. The cutting plate 30 is made of tool steel and the housing 28 is made of high-tensile aluminium or high-tensile steel.

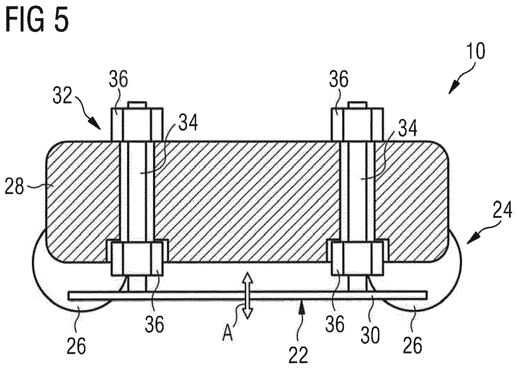

Figure 5 shows the manual rivet removing device 10 according to a second embodiment. Compared to the device shown in figures 1 and 2, the manual rivet removing device 10 according to the second embodiment comprises a distance adjustment unit 32 configured to variably adjust the distance between the cutting surface 22 and the component surface 14 in the state in which the spacer unit 24 abuts on the component surface 14. In other words, the distance adjustment unit 32 is configured to variably adjust a relative position between the cutting surface 22 and the spacer unit 24 in the surface normal direction of the cutting surface 22. In the present embodiment, the distance adjustment unit 32 is provided in form of a mounting for the cutting plate 30 configured to variably adjust a position of the cutting surface 22 relative to the spacer unit 24 in the surface normal direction of the cutting surface 22 as indicated by arrow A in figure 5. Specifically, the distance adjustment unit 32 comprises two threaded rods 34 fixed to the cutting plate 30 on a surface opposed to the cutting surface 22. Each of the rods 34 is arranged in a through hole provided in the housing 28 and secured thereto by means of two screw nuts 36, respectively, as shown in figure 5. By varying the position of the screw nuts 36 screwed on the rods 34, the position of the cutting plate 30 and thus of the cutting surface 22 can be adjusted relative to the spacer unit 24.

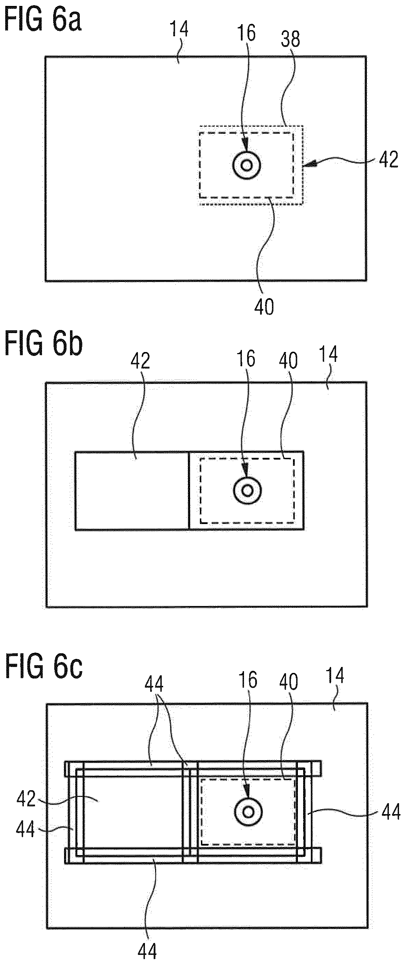

In the following, by referring to figures 6a to 6c, a method is described for removing a rivet 12 secured to a component using the manual rivet removing device 10 according to the first or second embodiment. In a first step, a covering of the component surface 14 by means of a packaging foil is performed. Then, the packaging foil is cut along cutting lines 38 around a work area 40 on the component surface 14 comprising the rivet head 16 to create a flap 42 in the packaging foil as indicated in figure 6a. To minimize the risk of damage when cutting out the flap 42, the packaging foil is lifted from the component surface 14.

In a next step, the created flap 42 is folded back to lay open the work area 40 delimited by the packaging foil as depicted in figure 6b. Then, as shown in figure 6c, the packaging foil around the work area 40 and the flap 42 are fixed by attaching a fixing tape 44 along an edge region of the working area 40 and the folded flap 42.

Further, a method step of removing material from the rivet head 16 protruding from the component surface 14 is performed by manually dragging the cutting surface 22 of the manual rivet removing device 10 over the rivet head 16. This step is repeatedly performed until the spacer unit 24 of the manual rivet removing device 10 can be evenly positioned onto the component surface 14 in a position where the cutting surface 22 faces the rivet 12 to be removed. In order to avoid a contamination of the work area 40 by particles generated upon removing material from the rivet head 16 by means of the cutting surface 22, the generated particles are drawn off by means of a vacuum cleaner during performing the step of removing material from the rivet head 16.

After having loosened the rivet 12 by removing material from the rivet head 16 as depicted in figure 4, a rivet shaft of the rivet 12 is released from a through-hole provided in the component. Then, a cleaning of the work area 40 and the created flap 42 in the packaging foil is performed prior to covering and closing the work area 40 by folding back the created flap 42 onto the work area 40 and fixing the flap 42 to the packaging foil by attaching a fixing tape along the cutting line 38 of the flap 42 so as to seal the packaging foil.

## Claims

1. Manual rivet removing device (10) for loosening a rivet, in particular a blind rivet, secured to a component which comprises an exposed cutting surface (22) for removing material from a rivet head (16) protruding from a component surface (14) and a spacer unit (24) for spacing the cutting surface (22) from the component surface (14), wherein, in a state in which the spacer unit (24) abuts on the component surface (14), the spacer unit (24) is designed to space the cutting surface (22) from the component surface (12) at a predefined distance and to align the cutting surface (22) relative to the component surface (14).

2. Manual rivet removing device according to claim 1, wherein the cutting surface (22) is configured to remove material from a locking collar (18) of a locking spindle blind rivet.

3. Manual rivet removing device according to claim 1 or 2, wherein the cutting surface (22) is a surface coated with abrasives, in particular a filing surface having a pattern of spaced grooves.

4. Manual rivet removing device according to any one of claims 1 to 3, wherein the cutting surface (22) is planar.

5. Manual rivet removing device according to any one of claims 1 to 4, wherein, in the state in which the spacer unit (24) abuts on the component surface (14), the cutting surface (22) faces the component surface (14).

6. Manual rivet removing device according to any one of claims 1 to 5, wherein, in the state in which the spacer unit (24) abuts on the component surface (14), the spacer unit (24) is designed to align the cutting surface (22) in parallel to the component surface (14).

7. Manual rivet removing device according to any one of claims 1 to 6, wherein the spacer unit (24) protrudes beyond the cutting surface (22) in a surface normal direction of the cutting surface (22).

8. Manual rivet removing device according to any one of claims 1 to 7, wherein the spacer unit (24) protrudes beyond the cutting surface (22) in a longitudinal and/or transversal direction of the cutting surface (22).

9. Manual rivet removing device according to any one of claims 1 to 8, wherein the spacer unit (24) is at least partially made of Teflon.

10. Manual rivet removing device according to any one of claims 1 to 9, wherein the spacer unit (24) comprises at least four spacer wheels (26) arranged around the cutting surface (22) and configured to roll over the component surface (14) to move the manual rivet removing device (10) relative to the component surface (14).

11. Manual rivet removing device according to any one of claims 1 to 10, further comprising a cutting plate (30) having the cutting surface (22) and a housing (28) supporting the cutting plate (30), wherein in particular the housing (28) is made of aluminium or steel and the cutting plate (30) is made of steel, particularly tool steel.

12. Manual rivet removing device according to any one of claims 1 to 11, further comprising a distance adjustment unit (32) configured to variably adjust the predefined distance between the cutting surface (22) and the component surface (14) in the state in which the spacer unit (24) abuts on the component surface (14).

13. Manual rivet removing device according to claim 12, wherein the distance adjustment unit (32) is provided in form of a mounting for supporting the spacer unit (24) or the cutting plate (30) and is configured to variably adjust a position of the cutting surface (22) relative to the spacer unit (24) in a surface normal direction of the cutting surface (22).

14. Method for removing a rivet, in particular a blind rivet, secured to a component using a manual rivet removing device (10) according to any one of claims 1 to 13, which comprises the step of removing material from a rivet head (16) protruding from a component surface (14) by manually dragging a cutting surface (22) of the manual rivet removing device (10) over the rivet head (16).

15. Method according to claim 14, further comprising the steps of:
- covering the components surface (14) with a packaging foil;
- cutting the packaging foil along a work area (40) around the rivet head (16) to create a flap (42) in the packaging foil;
- laying open the work area (40) around the rivet head (16) by folding back the flap (42);
- fixing the packaging foil around the work area (40) and the flap (42) by attaching a fixing tape (40) along an edge region of the working area (40) and the flap (42);
- drawing off particles created upon removing material from the rivet head (16) by means of a vacuum cleaner;
- releasing a shaft of the rivet (12) from a through-hole provided in the component after loosening the rivet (12) by removing material of the rivet head (16);
- cleaning the work area (40) and the flap (42); and
- covering and closing the work area (40) by folding back the flap (42) onto the work area (40) and fixing the flap (42) to the packaging foil by attaching a fixing tape along a cutting line (38) of the flap (42) to seal the packaging foil.

## Amended claims

### Amended claims in accordance with Rule 137(2) EPC.

1. Manual rivet removing device (10) for loosening a rivet, in particular a blind rivet, secured to a component, the manual rivet removing device comprising an exposed cutting surface (22) for removing material from a rivet head (16) protruding from a component surface (14) and a spacer unit (24) for spacing the cutting surface (22) from the component surface (14),
wherein the spacer unit (24) comprises at least four spacer wheels (26) arranged around the cutting surface (22) and configured to roll over the component surface (14) to move the manual rivet removing device (10) relative to the component surface (14),
wherein the spacer unit (24) protrudes beyond the cutting surface (22) in a surface normal direction of the cutting surface (22), and
wherein, in a state in which the at least four spacer wheels (26) abuts on the component surface (14), the spacer unit (24) is designed to space the cutting surface (22) from the component surface (14) at a predefined distance and to align the cutting surface (22) in parallel to the component surface (14).

2. Manual rivet removing device according to claim 1, wherein the cutting surface (22) is configured to remove material from a locking collar (18) of a locking spindle blind rivet.

3. Manual rivet removing device according to claim 1 or 2, wherein the cutting surface (22) is a surface coated with abrasives, in particular a filing surface having a pattern of spaced grooves.

4. Manual rivet removing device according to any one of claims 1 to 3, wherein the cutting surface (22) is planar.

5. Manual rivet removing device according to any one of claims 1 to 4, wherein, in the state in which the spacer unit (24) abuts on the component surface (14), the cutting surface (22) faces the component surface (14).

6. Manual rivet removing device according to any one of claims 1 to 5, wherein the spacer unit (24) protrudes beyond the cutting surface (22) in a longitudinal and/or transversal direction of the cutting surface (22).

7. Manual rivet removing device according to any one of claims 1 to 6, wherein the spacer unit (24) is at least partially made of Teflon.

8. Manual rivet removing device according to any one of claims 1 to 7, further comprising a cutting plate (30) having the cutting surface (22) and a housing (28) supporting the cutting plate (30), wherein in particular the housing (28) is made of aluminium or steel and the cutting plate (30) is made of steel, particularly tool steel.

9. Manual rivet removing device according to any one of claims 1 to 8, further comprising a distance adjustment unit (32) configured to variably adjust the predefined distance between the cutting surface (22) and the component surface (14) in the state in which the spacer unit (24) abuts on the component surface (14).

10. Manual rivet removing device according to claim 9, wherein the distance adjustment unit (32) is provided in form of a mounting for supporting the spacer unit (24) or the cutting plate (30) and is configured to variably adjust a position of the cutting surface (22) relative to the spacer unit (24) in a surface normal direction of the cutting surface (22).

11. Method for removing a rivet, in particular a blind rivet, secured to a component using a manual rivet removing device (10) according to any one of claims 1 to 10, which comprises the step of removing material from a rivet head (16) protruding from a component surface (14) by manually dragging a cutting surface (22) of the manual rivet removing device (10) over the rivet head (16).

12. Method according to claim 11, further comprising the steps of:
- covering the component surface (14) with a packaging foil;
- cutting the packaging foil along a work area (40) around the rivet head (16) to create a flap (42) in the packaging foil;
- laying open the work area (40) around the rivet head (16) by folding back the flap (42);
- fixing the packaging foil around the work area (40) and the flap (42) by attaching a fixing tape (40) along an edge region of the working area (40) and the flap (42);
- drawing off particles created upon removing material from the rivet head (16) by means of a vacuum cleaner;
- releasing a shaft of the rivet (12) from a through-hole provided in the component after loosening the rivet (12) by removing material of the rivet head (16);
- cleaning the work area (40) and the flap (42); and
- covering and closing the work area (40) by folding back the flap (42) onto the work area (40) and fixing the flap (42) to the packaging foil by attaching a fixing tape along a cutting line (38) of the flap (42) to seal the packaging foil.
